# EUROPÄISCHE PATENTSCHRIFT

(11) **EP 2 995 274 B1**
(45) Veröffentlichungstag und Bekanntmachung des Hinweises auf die Patenterteilung: **12.04.2017**
(21) Anmeldenummer: 14184579.2
(22) Anmeldetag: 12.09.2014
(51) Int. Cl.: A61C 1/12, A61C 1/00, A61C 1/14

(54) **Zahnärztliches Handinstrument und Kopfgehäuse hierfür**
Handheld dental instrument and head housing for the same
Instrument dentaire à main et son boîtier de tête

(43) Veröffentlichungstag der Anmeldung: 16.03.2016
(73) Patentinhaber: Kaltenbach & Voigt GmbH, 88400 Biberach (DE)
(72) Erfinder: Kuhn, Bernhard, 88400 Biberach (DE); Claßen, Thomas, 88519 Herbertingen (DE)
(74) Vertreter: Thun, Clemens

(56) Entgegenhaltungen:
- EP-A1- 0 109 507
- EP-A2- 1 025 809
- DE-B- 1 081 188
- US-A1- 2008 118 890

## Beschreibung

Die vorliegende Erfindung betrifft ein zahnärztliches Handinstrument gemäß dem Oberbegriff des Anspruchs 1, welches eine Griffhülse sowie ein am vorderen Ende der Griffhülse angeordnetes Kopfgehäuse zur Aufnahme bzw. Halterung eines Behandlungsinstruments aufweist. Ferner betrifft die vorliegende Erfindung ein entsprechendes Kopfgehäuse für ein zahnärztliches Handinstrument. Das Handinstrument und das Kopfgehäuse sind dabei für die Abgabe eines Behandlungs-, Reinigungs- oder Kühlmediums ausgebildet.

Zahnärztliche Handinstrumente zur Durchführung von Behandlungen im Mundraum eines Patienten sind üblicherweise dazu ausgelegt, ergänzend zu einer Bearbeitung beispielsweise eines Zahns auch ein Medium abzugeben, welches zu Reinigungs- oder Kühlzwecken eingesetzt wird. Bei diesem Medium kann es sich um Luft, Wasser oder ein Luft-Wasser-Gemisch in Form eines Sprays handeln.

Ein zahnärztliches Handinstrument dieser Art weist üblicherweise eine Griffhülse mit einem Kopfbereich auf, der zur Aufnahme bzw. Halterung des Behandlungsinstruments, bei dem es sich beispielsweise um einen zahnärztlichen Bohrer handelt, ausgebildet ist. Das Medium soll dabei derart abgegeben werden, dass es auf die von dem Bohrer zu bearbeitende Zahnoberfläche gerichtet ist. Hierzu ist im unteren Bereich des Kopfgehäuses in der Regel ein so genannter Spraydeckel oder Sprayeinsatz angeordnet. Es handelt sich um ein ringartiges Bauteil, welches in einem zylinderartigen Hohlraum des Kopfgehäuses montiert wird und Medienleitungen aufweist, welche in entsprechende Abgabeöffnungen münden. Die Medienleitungen des Sprayeinsatzes sind dabei mit entsprechenden Medienleitungen, die sich durch das Handinstrument und das Kopfgehäuse erstrecken, fluidgekoppelt.

Bei den üblicherweise zur zahnärztlichen Behandlung zum Einsatz kommenden so genannten Winkelstücken, also Handinstrumenten, bei denen die Längsachse des Kopfgehäuses, welche also beispielsweise die Ausrichtung des Bohrers festlegt, abgewinkelt zur Längsachse der Griffhülse angeordnet ist, sind im Regelfall zwei Medienleitungen für Druckluft und Wasser vorgesehen, die sich zunächst längs der Griffhülse erstrecken und in zwei Bohrungen im Kopfgehäuse münden. Eine Abdichtung erfolgt hierbei beispielsweise über an den Mantelflächen der Bohrungen des Kopfgehäuses bzw. der Medienleitungen anliegende, elastische Bauteilen. Die Weiterleitung der von den beiden Medienleitungen zur Verfügung gestellten Medien erfolgt dann im Regelfall über voneinander unabhängige weiterführende Verbindungsbohrungen, welche die Anschlussbohrungen, in welche die sich durch die Griffhülse erstreckenden Medienleitungen münden, mit der inneren Geometrie des Kopfgehäuses verbinden. Das Kopfgehäuse weist hierbei in der Regel einen im Wesentlichen zylinderartigen inneren Hohlraum auf, der zur Aufnahme einerseits der Antriebskomponenten und Halterung für den Bohrer dient und in dem andererseits auch der oben erwähnte Spraydeckel angeordnet ist. Die das Kopfgehäuse durchsetzenden weiterführenden Bohrungen münden also im Innenbereich des Kopfgehäuses derart, dass sie in die meist umlaufenden Medienkanäle des in das Kopfgehäuse eingesetzten Spraydeckels bzw. Sprayeinsatzes übergehen.

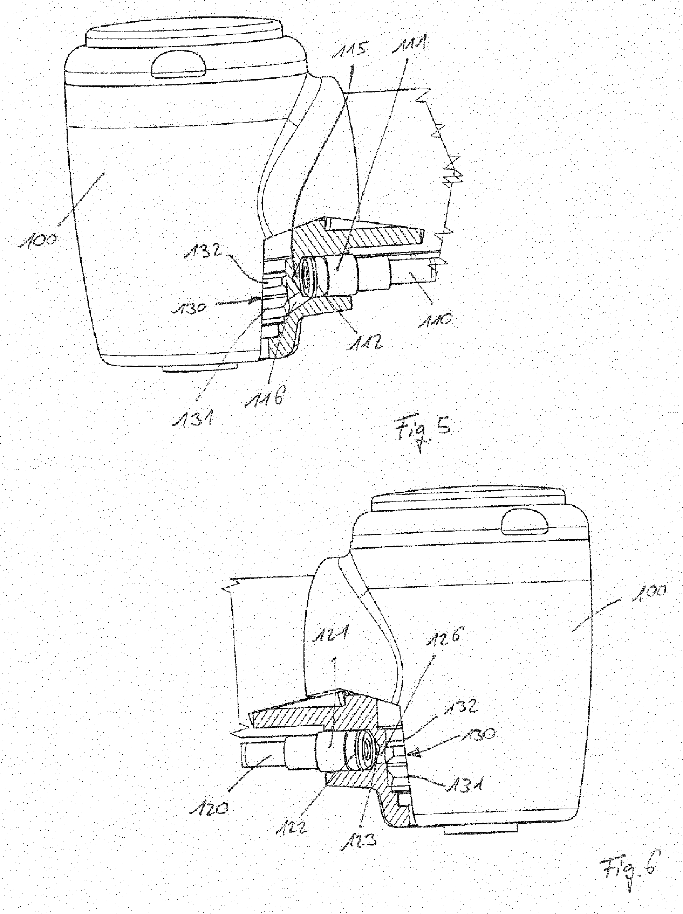

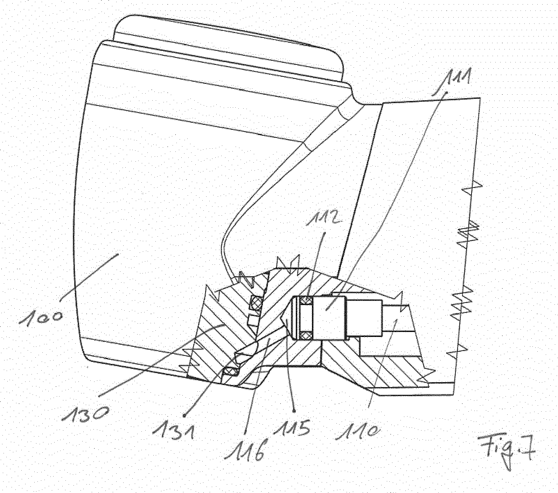

Die zuvor beschriebene Situation ist in den Figuren 5 bis 7 dargestellt, welche die Ausgestaltung eines Kopfgehäuses 100 gemäß einer aus dem Stand der Technik bekannten Lösung zeigen. Erkennbar sind hierbei die Endbereiche der sich durch die nicht dargestellte Griffhülse des Handinstruments erstreckenden Medienleitungen 110 und 120, welche jeweils in die zugehörige Anschlussbohrung 115 bzw. 125 des Kopfgehäuses 100 münden. Erkennbar ist ferner, dass am vorderen Ende der Medienleitungen 110, 120 jeweils ein Anschlusselement 111, 121 mit einer entsprechenden umlaufenden Dichtung 112, 122 angeordnet ist, um einen entsprechenden dichten Abschluss zwischen Leitung und Anschlussbereich des Kopfgehäuses 100 zu ermöglichen.

Ausgehend von diesen Anschlussbohrungen 115 bzw. 125 erstrecken sich dann entsprechende Verbindungsbohrungen 116 bzw. 126, welche in den inneren zylinderförmigen Aufnahmebereich des Kopfgehäuses 100 münden. Gezeigt ist ferner der in diesem Innenbereich angeordnete Sprayeinsatz 130, der zwei umlaufende ringförmige Nuten oder Einschnitte 131 und 132 aufweist, welche umlaufende Medienkanäle bilden, die mit den Querverbindungsbohrungen 116 und 126 gekoppelt sind. Das heißt, die Querverbindungsbohrungen 116 und 126 sind jeweils derart ausgeführt, dass sie in eine der beiden entsprechenden umlaufenden Nuten 131 und 132 münden. Diese umlaufenden Nuten 131, 132, welche mittels entsprechender Dichtelemente abgedichtet sind, münden dann in nicht dargestellte Abgabeöffnungen, über welche die Medien entweder einzeln oder als Luft-Wasser-Gemisch, also als Spray abgegeben werden. Hierzu sind die Abgabeöffnungen an der Unterseite des Sprayeinsatzes 130 verteilt um den Bohrer oder das Werkzeug angeordnet.

Wie anhand der Figuren 5 bis 7 erkennbar ist, sind die beiden umlaufenden Nuten 131, 132 des Sprayeinsatzes 130, welche die Medienkanäle bilden, in unterschiedlichen Ebenen angeordnet. Die zu diesen Nuten 131, 132 führenden Querverbindungsbohrungen 116 und 126 müssen deshalb zwangsläufig - zumindest eine hiervon - geneigt im Vergleich zur Innenoberfläche des inneren Hohlraums des Kopfgehäuses 100 ausgeführt sein. In diesem Fall betrifft dies die Querverbindungsbohrung 116, welche entsprechend den Darstellungen zu der unteren Nut 131 führt.

Die Winkellage der Querverbindungsbohrung 116 hat zur Folge, dass sich an der Austrittsstelle dieser Bohrung 116 eine elliptische Öffnung ergibt, die zwangsläufig in axialer Richtung des Kopfgehäuses höher ist als der Bohrungsdurchmesser selbst. Die Breite des entsprechenden umlaufenden Medienkanals 131 muss entsprechend an die Höhe dieser elliptischen Austrittsöffnung der Verbindungsbohrungen 116 angepasst werden, was einen konstruktiv höheren Aufwand bei der Herstellung des Kopfbereichs 100 erfordert.

Hierbei ist zu berücksichtigen, dass eine optimale Medienversorgung nur dann gewährleistet werden kann, wenn die Querschnitte der Verbindungsbohrungen sowohl an die unterschiedlichen vorherrschenden Druckbedingungen der Medien, als auch an die konstruktive Auslegung der funktionsrelevanten Bauteilperipherie angepasst werden. Eine beliebige Verkleinerung der Bohrungsquerschnitte für die Verbindungsbohrungen ist dementsprechend nicht möglich. Auf der anderen Seite ist es zwingend erforderlich, dass die umlaufenden Medienkanäle des Sprayeinsatzes klar räumlich durch einen umlaufenden Steg oder besser ein entsprechendes elastisches dichtendes Element voneinander getrennt werden, um eine gleichmäßige Medienabgabe sicherzustellen.

All die vorstehenden Erfordernisse führen dazu, dass sich eine größere Bauhöhe für das Kopfteil eines zahnärztlichen Handinstruments ergibt.

Aus der EP 1 025 809 A2 ist ein zahnärztliches Handinstrument mit einer Griffhülse und einem am vorderen Ende der Griffhülse angeordneten Kopfgehäuse bekannt. Dabei mündet eine, sich durch die Griffhülse erstreckende Medienleitung über eine Verbindungsbohrung in einen, im Kopfgehäuse gebildeten Hohlraum. Der den Hohlraum umschließende Innenwandbereich des Kopfgehäuses weist eine Aussparung auf, in welche die Verbindungsbohrung mündet.

Insoweit ähnliche Handinstrumente sind auch aus den weiteren Schriften EP 0 109 507 A1, US 2008/0118890 A1 und DE 10 81 188 B bekannt.

Der vorliegenden Erfindung liegt die Aufgabenstellung zugrunde, im Vergleich zu den bislang bekannten Lösungen, insbesondere im Vergleich zu dem in den Figuren 5 bis 7 dargestellten Stand der Technik eine verbesserte Lösung zur Weiterleitung der Medien zur Verfügung zu stellen, bei der die oben beschriebenen Nachteile zumindest teilweise vermieden werden.

Die Aufgabe wird durch ein zahnärztliches Handinstrument, welche die Merkmale des Anspruchs 1 aufweist, sowie durch ein Kopfgehäuse für ein zahnärztliches Handinstrument gemäß Anspruch 6 gelöst. Vorteilhafte Weiterbildungen der Erfindung sind Gegenstand der abhängigen Ansprüche.

Die erfindungsgemäße Lösung beruht auf dem Gedanken, in den Bereich des Kopfgehäuses, in den die Verbindungsbohrungen münden, Aussparungen - beispielsweise in Form von Einfräsungen - einzubringen, welche die Verbindungsbohrungen im Übergangsbereich zu den Medienkanälen des Sprayeinsatzes erweitern.

Erfindungsgemäß wird deshalb ein zahnärztliches Handinstrument mit einer Griffhülse sowie einem am vorderen Ende der Griffhülse angeordneten Kopfgehäuse zur Aufnahme bzw. Halterung eines Behandlungsinstruments vorgeschlagen, wobei das Kopfgehäuse einen im Wesentlichen zylinderartigen Hohlraum aufweist, der über mindestens eine Verbindungsbohrung mit einem zur Griffhülse weisenden Anschlussbereich verbunden ist, und wobei die Verbindungsbohrung an ihrem der Griffhülse zugewandten Ende mit einer sich durch die Griffhülse erstreckenden Medienleitung gekoppelt ist. Der den Hohlraum des Kopfgehäuses umschließende Innenwandbereich weist hierbei zumindest eine sichelförmig ausgebildete Aussparung auf, in welche die Verbindungsbohrung mündet.

Wie nachfolgend näher erläutert wird, führt die erfindungsgemäße Maßnahme dazu, dass die Bauhöhe des Kopfgehäuses reduziert werden kann und trotz allem das Handinstrument bzw. insbesondere das Kopfgehäuse wirtschaftlich und prozesssicher gefertigt werden können. Ein weiterer Vorteil besteht darin, dass die Durchmesser der Verbindungsbohrungen bei der erfindungsgemäßen Lösung unberührt bleiben, also in bisheriger Weise ausgeführt sein können.
Durch die großen Radien, die bei Realisierung der erfindungsgemäßen Aussparungen entstehen, werden die Medien laminar in die umlaufenden Einstiche, also in die Medienleitungen des Sprayeinsatzes weitergeleitet. Diese gleichmäßige Verteilung führt dazu, dass das im Bereich der Austrittsstelle der Medien entstehende Spraygemisch über einen großen Druckbereich im Wesentlichen unverändert konstant bleibt.

Letztendlich ergeben sich also zahlreiche Vorteile, welche durch einfach durchzuführende Maßnahmen erhalten werden.

Nachfolgend soll die Erfindung anhand der beliegenden Zeichnung näher erläutert werden. Es zeigen:
- Figur 1: eine seitliche Ansicht eines erfindungsgemäßen zahnärztlichen Handinstruments;
- Figuren 2 bis 4: Ansichten eines erfindungsgemäß ausgestalteten Innenwandbereichs eines Kopfgehäuses für das in Figur 1 dargestellte zahnärztliche Handinstrument und
- Figuren 5 bis 7: eine aus dem Stand der Technik bekannte Ausgestaltung eines Kopfgehäuses eines zahnärztlichen Handinstruments.

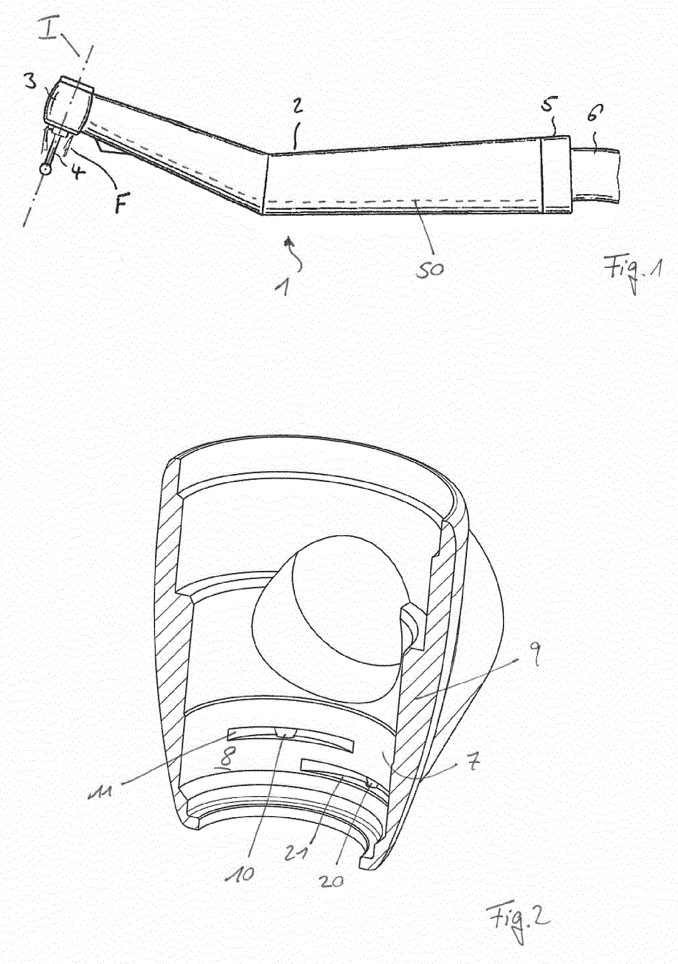

Bei dem in Figur 1 dargestellten Handinstrument 1 handelt es sich um ein zahnärztliches Bohrhandstück, wobei allerdings darauf hinzuweisen ist, dass die erfindungsgemäße Lösung auch bei anderen zahnärztlichen oder chirurgischen Handinstrumenten zum Einsatz kommen könnte.

Das dargestellte Handinstrument 1 besteht aus einer länglichen Griffhülse 2, welche aus ergonomischen Gründen leicht abgewinkelt ist und hierdurch eine verbesserte Handhabung durch einen Zahnarzt ermöglicht. Am vorderen Ende befindet sich ein Kopfbereich 3, der im Vergleich zum angrenzenden Bereich der Griffhülse 2 etwa rechtwinklig ausgerichtet ist und innerhalb dessen ein zahnärztliches Werkzeug - im vorliegenden Fall ein zahnärztlicher Bohrer 4 - gelagert ist. Hierzu ist eine sog. Spannzange vorgesehen, in welche zahnärztliche Bohrer je nach Bedarf eingesetzt und gesichert werden können. Der Bohrer 4 bzw. die Spannzange wird dabei über ein nicht dargestelltes Antriebssystem in Rotation versetzt. Beispielsweise könnte hierzu im Kopfbereich 3 eine Turbine angeordnet sein. Es wäre allerdings auch denkbar, den Bohrer 4 über einen Elektromotor anzutreiben, wobei dieser dann innerhalb der Griffhülse 2 angeordnet oder als separate Einheit an das Handstück angekoppelt sein könnte. An seinem hinteren Ende ist das Handinstrument 1 über ein Kupplungsstück 5 drehbar mit einem Versorgungsschlauch 6 zur Zuführung von Versorgungs- und Behandlungsmedien, Licht und/oder elektrische Energie verbunden.

Während der Behandlung eines Zahns mit dem rotierenden Bohrer 4 entsteht aufgrund der Reibung Wärme, welche schädlich für den Zahn sein kann. Aus diesem Grund ist es wünschenswert, während der Behandlung die zu bearbeitende Stelle zu kühlen aber auch zu reinigen. Hierzu ist vorgesehen, ein Medium in Form eines Fluids auf den Bohrer 4 zu richten, welches an der Unterseite des Kopfbereichs 3 abgegeben wird. An der Unterseite des Kopfbereichs 3 ist hierzu der bereits erwähnte Sprayeinsatz angeordnet, der einerseits mit mindestens einer sich durch die Griffhülse 2 des Handinstruments 1 erstreckenden Medienleitung 50 verbunden ist und andererseits zumindest einen Auslass aufweist, über den das Medium F auf den Bohrer 4 gerichtet ist. Bei diesem Medium kann es sich um Luft, um Wasser oder um ein Luft-Wasser-Gemisch in Form eines Sprays handeln. Dieses kann zu Reinigungs- und Kühlungszwecken auf den zu bearbeitenden Zahn gerichtet werden.

Die grundsätzliche Übermittlung der Medien erfolgt ebenso wie bei dem bereits aus dem Stand der Technik bekannten Handinstrument, welches in den Figuren 5 bis 7 dargestellt ist und oben erläutert wurde. Die sich durch die Griffhülse erstreckenden Medienleitungen 50 führen also zum Kopfgehäuse 9 und werden in diesem durch Verbindungsbohrungen weitergeführt, welche zu einem etwa zylinderartigen Hohlraum führen, in dem u.a. der Sprayeinsatz mit den umlaufenden Kanälen - so wie in den Figuren 5 bis 7 gezeigt - angeordnet ist.

Die erfindungsgemäße Abwandlung bzw. Änderung der bisherigen Konfiguration besteht nunmehr darin, dass - wie in den Figuren 2 bis 4 dargestellt - die Verbindungsbohrungen 10 und 20, welche den zur Griffhülse 2 weisenden Anschlussbereich des Kopfgehäuses 9 mit dem Innenwandbereich 8 des Hohlraums 7 verbinden und von denen zumindest eine gegenüber einer senkrecht zur Längsachse I ausgerichteten Ebene geneigt verläuft, nicht unmittelbar in den Hohlraum 7 münden. Stattdessen werden sie zuvor durch in den Figuren 2 bis 4 erkennbare Aussparungen 11 bzw. 21 erweitert.

Diese Aussparungen 11, 21 erstrecken sich in einer Ebene senkrecht zur Längsachse I des Kopfgehäuses 3 und bezüglich des Innenwandbereichs 8 über einen deutlich größeren Umfang hinweg als dies bei den unmittelbar in diesen Bereich mündenden Verbindungsbohrungen 10, 20 der Fall wäre. Hierdurch ergibt sich im Querschnitt gesehen eine sichelartige Form für die Aussparungen 11, 21. Obwohl nicht Teil der Erfindung wäre es allerdings in gleicher Weise auch denkbar, dass diese Aussparungen 11, 21 sich über den gesamten Umfang der Innenwand 8 hinweg erstrecken, also dann ringartige Einstiche bilden, wobei auch eine teilringartige Form denkbar wäre.

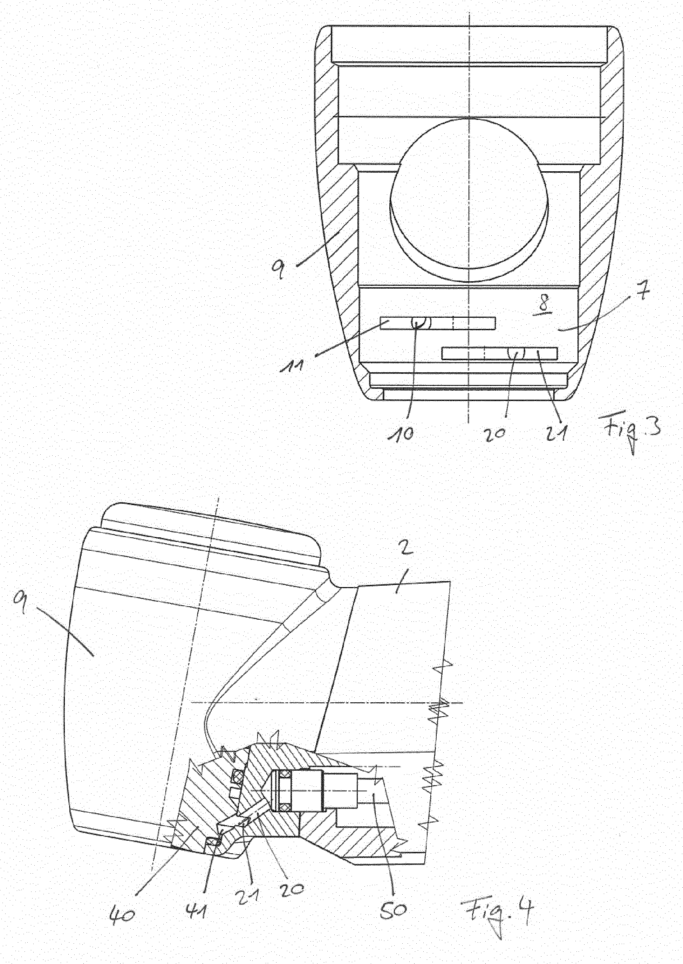

Selbstverständlich sind die Aussparungen 11, 21 oder Einstiche derart angeordnet, dass sie mit den entsprechenden umlaufenden Einstichen 41 des Sprayeinsatzes 40 (siehe Fig. 4) korrespondieren. Sie sind also in axialer Richtung gesehen auf gleicher Höhe wie die umlaufenden Kanäle 41 des Sprayeinsatzes 40angeordnet und weisen darüber hinaus vorzugsweise auf eine identische Höhe auf. Beispielsweise können sie mit Hilfe eines entsprechend ausgeführten T-Nuten-Fräsers in einfacher Weise in das Kopfgehäuse 3 eingebracht werden. Allerdings wären auch andere Verfahren zum Realisieren der Aussparungen 11, 21 denkbar, beispielsweise Erodieren oder Räumen.

Dadurch, dass die Aussparungen 11, 21 die Verbindungsbohrungen 10, 20 erweitern bzw. eröffnen, kann die Bauhöhe für das Kopfgehäuse 3 reduziert werden. Der Übergang zu den Medienkanälen des Sprayeinsatzes wird nämlich nunmehr durch die Aussparungen 11, 21 definiert, nicht mehr durch die - zumindest teilweise - geneigt ausgerichteten Verbindungsbohrungen 10, 20. Die Aussparungen 11, 21 können also im Vergleich zu den Bohrungen 10, 20 eine geringere Höhe aufweisen, was letztendlich bedeutet, dass eine entsprechende Höhenreduzierung auch bei dem Sprayeinsatz vorgenommen und dementsprechend der Kopfbereich 3 des Handinstruments insgesamt kompakter realisiert werden kann.

Trotz allem wird der Übergang der Medien sogar optimiert, da aufgrund des resultierenden größeren Übergangsbereichs zu dem Sprayeinsatz eine gleichmäßigere und damit druckunempfindlichere Verteilung der Medien an den Übergangsstellen erzielt wird. Dies wiederum bedeutet, dass alle Abgabeöffnungen für die Medien in dem Sprayeinsatz gleichmäßiger und besser versorgt werden können und insgesamt dementsprechend die Funktionsfähigkeit optimiert wird. Dieser verbesserte Übergang ergibt sich im Übrigen auch denn, wenn die zugehörige Verbindungsbohrung nicht geneigt sondern stattdessen senkrecht zur Achse I und damit zur Oberfläche des inneren Hohlraums verläuft. Demzufolge ist es in jedem Fall von Vorteil, die erfindungsgemäßen Aussparungen bei beiden Verbindungsbohrungen vorzusehen.

Letztendlich können also mit einer verhältnismäßig einfach durchzuführenden Maßnahme die Eigenschaften eines Kopfgehäuses für ein zahnärztliches Handinstrument deutlich verbessert werden. Insbesondere kann die Bauhöhe reduziert werden, wobei trotz allem die Weiterleitung der Medien sogar verbessert wird. Hervorzuheben ist dabei insbesondere, dass diese Vorteile erreicht werden, ohne dass die Verbindungsbohrungen hinsichtlich ihres Querschnitts weiter reduziert werden müssen.

## Patentansprüche

1. Zahnärztliches Handinstrument (1) mit einer Griffhülse (2) sowie einem am vorderen Ende der Griffhülse (2) angeordneten Kopfgehäuse (9) zur Aufnahme bzw. Halterung eines Behandlungsinstruments (4),
wobei das Kopfgehäuse (9) einen im Wesentlichen zylinderartigen Hohlraum (7) aufweist, der über mindestens eine Verbindungsbohrung (10, 20) mit einem zur Griffhülse (2) weisenden Anschlussbereich verbunden ist, und
wobei die Verbindungsbohrung (10, 20) an ihrem der Griffhülse (2) zugewandten Ende mit einer sich durch die Griffhülse (2) erstreckenden Medienleitung (50) gekoppelt ist,
und wobei der den Hohlraum (7) umschließende Innenwandbereich (8) des Kopfgehäuses (9) eine Aussparung (11, 21) aufweist, in welche die Verbindungsbohrung (10, 20) mündet,
**dadurch gekennzeichnet,**
**dass** die Aussparung (11, 21) sichelförmig ausgebildet ist.

2. Zahnärztliches Handinstrument nach Anspruch 1,
**dadurch gekennzeichnet,**
**dass** die Verbindungsbohrung (10, 20) gegenüber einer senkrecht zu einer Längsachse (I) des Hohlraums (7) verlaufenden Ebene geneigt ausgerichtet ist.

3. Zahnärztliches Handinstrument nach einem der vorherigen Ansprüche,
**dadurch gekennzeichnet,**
**dass** in dem Hohlraum (7) des Kopfgehäuses (9) ein Einsatzstück angeordnet ist, welches einen Medienkanal aufweist, der in Verbindung mit der Aussparung (11, 21) steht.

4. Zahnärztliches Handinstrument nach Anspruch 3,
**dadurch gekennzeichnet,**
**dass** die Höhe der Aussparung (11,21) der Höhe der des zugehörigen Medienkanals entspricht.

5. Zahnärztliches Handinstrument nach einem der vorherigen Ansprüche,
**dadurch gekennzeichnet,**
**dass** das Kopfgehäuse (9) mehrere Verbindungsbohrungen (10, 20) aufweist, welche jeweils in eine am Innenwandbereich (8) des Kopfgehäuses (9) ausgebildete Aussparung (11, 21) münden.

6. Kopfgehäuse (9) für ein zahnärztliches Handinstrument (1) zur Aufnahme bzw. Halterung eines Behandlungsinstruments (4),
wobei das Kopfgehäuse (9) einen im Wesentlichen zylinderartigen Hohlraum (7) aufweist, der über mindestens eine Verbindungsbohrung (10, 20) mit einem zur einer Griffhülse (2) des Handinstruments (1) weisenden Anschlussbereich verbunden ist, und wobei der den Hohlraum (7) umschließende Innenwandbereich (8) des Kopfgehäuses (9) eine Aussparung (11, 21) aufweist, in welche die Verbindungsbohrung (10, 20) mündet,
**dadurch gekennzeichnet,**
**dass** die Aussparung (11, 21) sichelförmig ausgebildet ist.

## Claims

1. Handheld dental instrument (1) with a grip sleeve (2), and with a head housing (9) arranged at the front end of the grip sleeve (2) and provided for receiving or holding a treatment instrument (4), wherein the head housing (9) has a substantially cylindrical hollow space (7) connected by at least one connecting bore (10, 20) to an attachment area that points to the grip sleeve (2), and
wherein the connecting bore (10, 20), at its end directed towards the grip sleeve (2), is coupled to a media line (50) extending through the grip sleeve (2),
and wherein the inner wall area (8) of the head housing (9) enclosing the hollow space (7) has a recess (11, 21) into which the connecting bore (10, 20) opens,
**characterized in that** the recess (11, 21) is crescent-shaped.

2. Handheld dental instrument according to Claim 1, **characterized in that** the connecting bore (10, 20) is oriented at an inclination with respect to a plane that runs perpendicularly to a longitudinal axis (I) of the hollow space (7).

3. Handheld dental instrument according to either of the preceding claims, **characterized in that** an insert piece is arranged in the hollow space (7) of the head housing (9), which insert piece has a media channel communicating with the recess (11, 21).

4. Handheld dental instrument according to claim 3, **characterized in that** the height of the recess (11, 21) corresponds to the height of the associated media channel.

5. Handheld dental instrument according to one of the preceding claims, **characterized in that** the head housing (9) has a plurality of connecting bores (10, 20) which each open into a recess (11, 21) formed on the inner wall area (8) of the head housing (9).

6. Head housing (9) for a handheld dental instrument (1) for receiving or holding a treatment instrument (4),
wherein the head housing (9) has a substantially cylindrical hollow space (7) connected by at least one connecting bore (10, 20) to an attachment area that points to a grip sleeve (2) of the handheld instrument (1),
and wherein the inner wall area (8) of the head housing (9) enclosing the hollow space (7) has a recess (11, 21) into which the connecting bore (10, 20) opens,
**characterized in that** the recess (11, 21) is crescent-shaped.

## Revendications

1. Instrument dentaire manuel (1) comprenant un manchon de préhension (2) ainsi qu'un boîtier de tête (9) disposé à l'extrémité avant du manchon de préhension (2) pour recevoir ou retenir un instrument de traitement (4),
le boîtier de tête (9) présentant une cavité essentiellement cylindrique (7) qui est connectée par le biais d'au moins un alésage de connexion (10, 20) à une région de raccordement tournée vers le manchon de préhension (2), et
l'alésage de connexion (10, 20) étant accouplé au niveau de son extrémité tournée vers le manchon de préhension (2) à une conduite de milieu (50) s'étendant à travers le manchon de préhension (2), et la région de paroi interne (8) du boîtier de tête (9) entourant la cavité (7) présentant un évidement (11, 21) dans lequel débouche l'alésage de connexion (10, 20),
**caractérisé en ce que** l'évidement (11, 21) est réalisé en forme de croissant.

2. Instrument dentaire manuel selon la revendication 1,
**caractérisé en ce que**
l'alésage de connexion (10, 20) est orienté de manière inclinée par rapport à un plan s'étendant perpendiculairement à un axe longitudinal (I) de la cavité (7).

3. Instrument dentaire manuel selon l'une quelconque des revendications précédentes,
**caractérisé en ce**
**qu'**une pièce d'insertion est disposée dans la cavité (7) du boîtier de tête (9), laquelle présente un canal de milieu qui est en liaison avec l'évidement (11, 21).

4. Instrument dentaire manuel selon la revendication 3,
**caractérisé en ce que**
la hauteur de l'évidement (11, 21) correspond à la hauteur du canal de milieu associé.

5. Instrument dentaire manuel selon l'une quelconque des revendications précédentes,
**caractérisé en ce que**
le boîtier de tête (9) présente plusieurs alésages de connexion (10, 20) qui débouchent chacun dans un évidement (11, 21) réalisé au niveau de la région de paroi interne (8) du boîtier de tête (9).

6. Boîtier de tête (9) pour un instrument dentaire manuel (1) pour recevoir ou retenir un instrument de traitement (4),
le boîtier de tête (9) présentant une cavité (7) essentiellement cylindrique qui est connectée par le biais d'au moins un alésage de connexion (10, 20) à une région de raccordement tournée vers un manchon de préhension (2) de l'instrument manuel (1), et
la région de paroi interne (8) du boîtier de tête (9) entourant la cavité (7) présentant un évidement (11, 21) dans lequel débouche l'alésage de connexion (10, 20),
**caractérisé en ce que**
l'évidement (11, 21) est réalisé en forme de croissant.
